# EUROPÄISCHE PATENTSCHRIFT

(11) **EP 3 453 444 B1**
(45) Veröffentlichungstag und Bekanntmachung des Hinweises auf die Patenterteilung: **04.11.2020**
(21) Anmeldenummer: 18185544.6
(22) Anmeldetag: 25.07.2018
(51) Int. Cl.: B01D 46/24, B01D 46/00

(54) **VORRICHTUNG ZUR FESTSTOFFABSCHEIDUNG AUS GASEN**
DEVICE FOR SEPARATION OF SOLIDS FROM GASES
DISPOSITIF DE SÉPARATION DE MATIÈRE SOLIDE DES GAZ

(30) Priorität: 12.09.2017 AT 507612017
(43) Veröffentlichungstag der Anmeldung: 13.03.2019
(73) Patentinhaber: Aigner GmbH, 4623 Gunskirchen (AT)
(72) Erfinder: Kraus, Helmut, 4053 Moos/Ansfelden (AT)
(74) Vertreter: Fabian, Ferdinand

(56) Entgegenhaltungen:
- EP-A1- 1 695 754
- WO-A1-2014/177155
- US-A- 5 152 815

## Beschreibung

Die Erfindung bezieht sich auf eine Vorrichtung zur Feststoffabscheidung aus Gasen mit einer oben an einen Rohgaskanal und unten an einen Austragstrichter anschließbare Rohgaskammer und mit wenigstens einem in der Rohgaskammer angeordneten Filter, dessen von einem Filtermantel umschlossener, von unten nach oben durchströmbarer Strömungskanal mit einer Reingaskammer verbunden ist, wobei das Filter an eine durch die oben und unten offene Rohgaskammer verlaufende Reingasleitung angeschlossen ist, die in die seitlich an die Rohgaskammer angrenzende Reingaskammer mündet, wobei weiter das Filter in wenigstens einer Reihe angeordnete, vertikale Filterpatronen umfasst, die in Öffnungen eines Einschubteils und an diesem unmittelbar anliegend gehalten sind, der Einschubteil in eine dem Boden der Reingasleitung zugehörige Führung eingreift, und wobei in der Einschubstellung des Einschubteils die Filterpatronen unter Zwischenlage einer Dichtung dicht an den mit entsprechenden Bodenöffnungen versehenen Boden der Reingasleitung angedrückt werden, wenn der Einschubteil im vorderen Bereich der Reingasleitung mithilfe eines Spannverschlusses an den Boden der Reingasleitung angedrückt gehalten wird.

Einfache Vorrichtungen zur Feststoffabscheidung aus Gasen weisen eine Rohgakammer auf, in der Lamellenfilter reihenweise angeordnet sind (DE 297 16 683 U1), sodass das durch eine Unterdruckbeaufschlagung der Lamellenfilter oben in die Rohgaskammer angesaugte Rohgas entlang der Lamellenfilter nach unten strömt und unter einer Feststoffabscheidung die Lamellenfilter durchsetzt, um über unten an die Lamellenfilter angesetzte Reingaskanäle abgezogen zu werden. Wegen der Abwärtsströmung des Rohgases innerhalb der Rohgaskammer kann bereits ein Teil der Feststofffracht in einem die Rohgaskammer nach unten abschließenden Austragstrichter gesammelt werden. Der sich an den Lamellenfiltern anlagernde restliche Feststoffanteil wird dann in zeitlichen Intervallen mithilfe von Druckluftimpulsen, mit denen die Lamellenfilter gegensinnig zur Reingasströmung beaufschlagt werden, von den Lamellenfiltern abgeblasen, um durch den Austragstrichter ausgetragen werden zu können. Nachteilig ist allerdings, dass zum Abblasen der Lamellenfilter gesonderte Druckleitungen vorgesehen sind und dass diese bekannten Filtervorrichtungen nur aufwendig zu größeren Filteranlagen verbunden werden können.

Darüber hinaus ist es bekannt (EP 0 172 538 A2), die Reingaskammer seitlich an die von oben mit Rohgas beaufschlagbare Rohgaskammer anzusetzen, wobei die übereinander in vertikalen Reihen in der Rohgaskammer angeordneten, horizontal ausgerichteten Filter in Öffnungen der Trennwand zwischen der Rohgaskammer und der Reingaskammer eingesetzt sind, sodass wiederum eine von oben nach unten gerichtete Rohgasströmung mit einer vorteilhaften Feststoffabscheidung genützt werden kann. Eine solche Filteranordnung ist jedoch für eine modulartige Erweiterung nicht vorgesehen.

Die US 5,152,815 A beschreibt einen Druckfilter umfassend einen Filtergehäuse, in das sich eine starre Reingas-Auslassleitung erstreckt, und in dem mehrere Gruppen von Filtern an einem Mehrrohrverteiler aufgehängt sind, der mit der Auslassleitung verbunden ist.

Aus der EP 1 695 754 A1 ist ein Kartuschenelement und ein Filterelement bekannt. Das Kartuschenelement ist ein plattenartiges Element und umfasst einen Planfilter, der aus einem zylindrisch geformten gefalteten Filtermedium besteht, eine Kappe, die die Falten und die Öffnung davon in einer planaren Form hält, ein oberes Endelement und ein Verstärkungsmaterial aus Rohren oder Rundstäben. Weiter wird ein Mechanismus zum Anbringen und Abnehmen eines plattenförmigen Kartuschenelements beschrieben, umfassend Führungselemente, die in Abständen unter dem Boden eines Kanals befestigt sind und geneigte elliptische Löcher aufweisen, Schienen, die in den Führungselementen befestigt sind und Verbindungslöcher aufweisen, Kopplungsvorrichtungen, die die Führungselemente mit den Schienen koppeln, indem sie die geneigten elliptischen Löcher und die Verbindungslöcher durchdringen, und Kassettenelemente, die zwischen den Schienen installiert sind und von diesen getragen werden.

Die WO 2014/177155 A1 beschreibt einen Rauchgasfilter mit einem Filtergehäuse, das in mindestens einen Filterabschnitt unterteilt ist, wobei in einem solchen Filterabschnitt eine nach unten gekrümmte Luftumlenkplatte angeordnet ist, und ein Lufteinlass umfasst, der oben auf dem Filtergehäuse angeordnet ist und mittig über der Luftumlenkplatte in den Filterabschnitt mündet. Der Rauchgasfilter umfasst ferner einen Luftauslass zum Abführen von gefilterter Luft, die den Lufteinlass und das Filtergehäuse durchlaufen hat.

Der Erfindung liegt die Aufgabe zugrunde, die Halterung der Filterpatronen in der Vorrichtung zu verbessern.

Ausgehend von einer Vorrichtung zur Feststoffabscheidung aus Gasen der eingangs geschilderten Art löst die Erfindung die gestellte Aufgabe dadurch, dass der Einschubteil in die Führung eingreift und diese Führung zur Herstellung der genannten dichtenden Anlage an den Boden in Einschubrichtung ansteigt.

Da die Rohgaskammer oben und unten offen ausgebildet ist und oben durch eine Reingasleitung für das Filter durchsetzt wird, ergeben sich vorteilhafte Voraussetzungen für eine Modulbauweise, weil eine solche Rohgaskammer aufgrund ihrer oben und unten offenen Bauweise vom Rohgas von oben nach unten durchströmt werden kann, ohne die Ableitung des Reingases aus dem Filter zu gefährden. Das Reingas kann ja durch die die Rohgaskammer quer zur Rohgasströmung durchsetzende Reingasleitung aus dem durch das Filter gebildeten Strömungskanal in die Reingaskammer abgesaugt werden, die sich seitlich an die Rohgaskammer anschließt. Die Rohgaskammer kann somit im einfachsten Fall oben an den Rohgaskanal und unten an den Austragstrichter angeschlossen werden. Es ist aber auch möglich, die Vorrichtung durch eine oben und/oder unten an diese Rohgaskammer angesetzte, übereinstimmend ausgebildete Rohgaskammer zu erweitern, ohne insbesondere für die Rohgasführung zusätzliche, aufwendige Leitungsverbindungen zwischen den einzelnen Rohgaskammern schaffen zu müssen. Der Einschubteil mit den Filterpatronen bildet eine einfach wechselbare Baueinheit, die lediglich aus der Führung entnommen oder in die Führung eingeschoben werden muss.

Da die Rohgase die quer zur Rohgasströmung verlaufende Reingasleitung umströmen, ist es von Vorteil, wenn die die Rohgaskammer durchsetzende Reingasleitung einen für eine nach unten gerichtete Rohgasumspülung des Filters günstigen Strömungsquerschnitt aufweist, weil dann die Druckverluste vergleichsweise klein gehalten werden können. Zu diesem Zweck kann die Reingasleitung eine zeltdachförmige Decke bilden, was einerseits eine gleichmäßige Strömungsaufteilung des Rohgases auf beide Seiten der Reingasleitung unterstützt und anderseits einfache Herstellungsbedingungen schafft.

Wie bereits erläutert wurde, bildet die erfindungsgemäße Rohgaskammer mit den eingesetzten Filtern eine vorteilhafte Voraussetzung zur Anpassung der Filtervorrichtung an unterschiedliche Filterleistungen. Zur Vergrößerung der Filterleistung und damit der Filterfläche können nämlich wenigstens zwei Rohgaskammern übereinander angeordnet werden, von denen die obere an den Rohgaskanal und die untere an den Austragstrichter anzuschließen sind, um eine Rohgasbeaufschlagung aller Filter bei vorteilhafter Feststoffabscheidung nach unten nützen zu können, und zwar unabhängig von der jeweiligen Ausführungsform der Filter. So können Filtereinsätze nicht nur in Form von Filterpatronen, sondern auch beispielsweise in Form von Filterplatten, Faltenbälgen oder Filterschläuchen verwendet werden. Es ist lediglich sicherzustellen, dass das nach dem Durchtritt durch den Filtermantel gereinigte Reingas in einem durch das jeweilige Filter gebildeten Strömungskanal nach oben in die oben an das Filter angeschlossene Reingasleitung strömt.

In der Zeichnung ist der Erfindungsgegenstand beispielsweise dargestellt. Es zeigen
- Fig. 1: eine modulartige Baueinheit einer erfindungsgemäßen Vorrichtung zur Feststoffabscheidung aus Gasen in einem Vertikalschnitt senkrecht zu den Reingasleitungen
- Fig. 2: einen Schnitt nach der Linie II-II der Fig. 1,
- Fig. 3: eine aus solchen modulartigen Baueinheiten zusammengesetzte erfindungsgemäße Vorrichtung in einem schematischen Schnitt senkrecht zu den Reingasleitungen und
- Fig. 4: einen Schnitt nach der Linie IV-IV der Fig. 3.

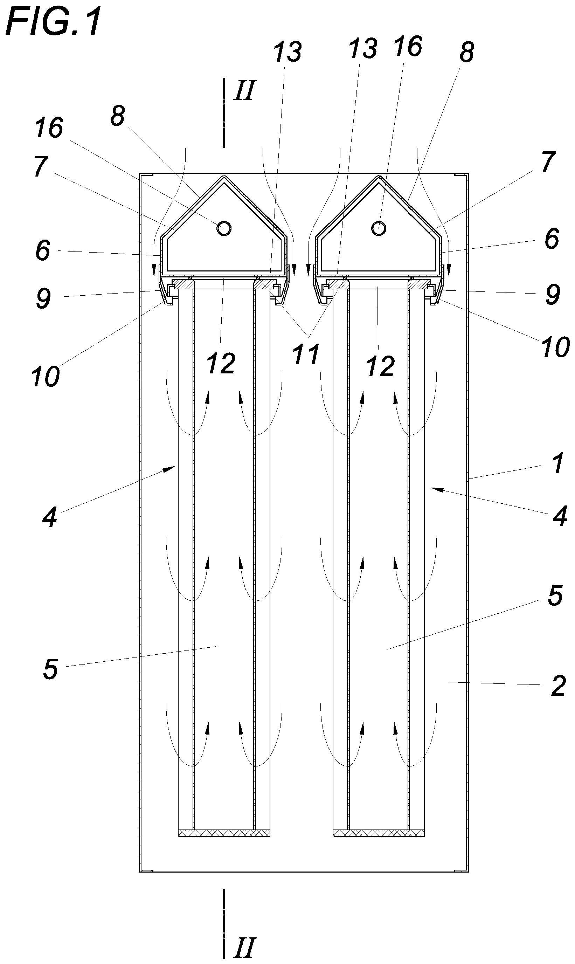

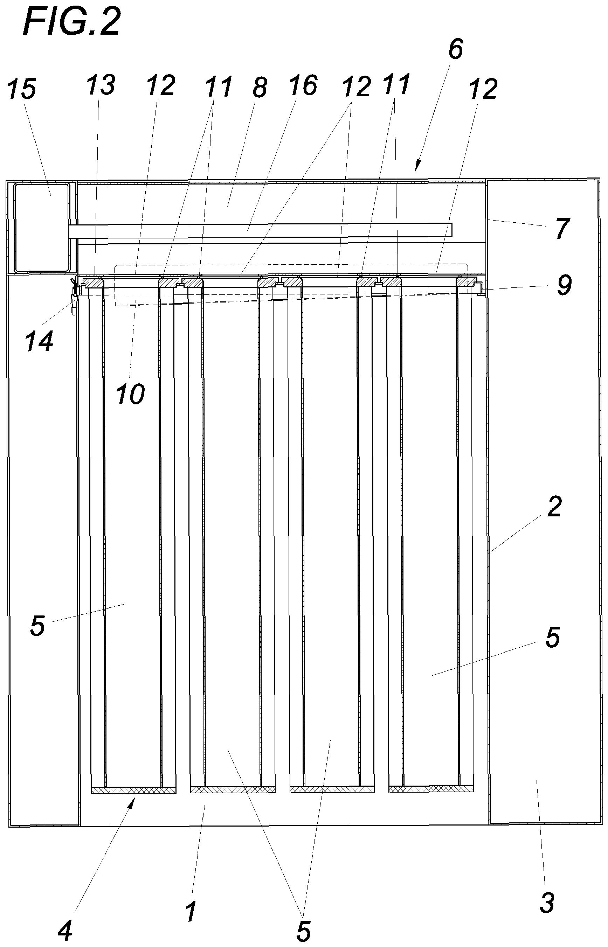

Die in den Fig. 1 und 2 dargestellte modulare Baueinheit weist eine unten und oben offene Rohgaskammer 1 mit einer Rückwand 2 auf, an die eine seitliche Reingaskammer 3 angrenzt. Innerhalb der Rohgaskammer 1 sind Filter 4 aus zwei zur Rückwand 2 senkrechten Reihen vertikaler Filterpatronen 5 angeordnet, die oben an eine in Reihenlängsrichtung verlaufende Reingasleitung 6 angeschlossen sind. Die je Reihe der Filterpatronen 5 vorgesehenen Reingasleitungen 6 durchsetzen die Rohgaskammer 1 und sind durch Durchtrittsöffnungen 7 in der Rückwand 2 mit der Reingaskammer 3 strömungsverbunden.

Da das Rohgas der Rohgaskammer 1 von oben zugeführt wird, werden die Reingasleitungen 6 außen vom Rohgas umströmt, wie dies in Fig. 1 durch die Strömungspfeile angedeutet ist. Es empfiehlt sich daher, die Reingasleitungen 6 mit einem für die Rohgasumspülung günstigen Strömungsquerschnitt auszubilden. Gemäß der dargestellten Ausführungsform weisen die Reingasleitungen 6 hierfür eine zeltdachförmige Decke 8 auf.

Um die Filterpatronen 5 in einfacher Art reihenweise auswechseln zu können, sind die Filterpatronen 5 einer Reihe je in einen Einschubteil 9 eingesetzt, der in eine Führung 10 auf der Unterseite der Reingasleitungen 6 eingreift. Diese Führung 10 steigt in Einschubrichtung an, sodass die Filterpatronen 5 in der gezeichneten Einschubstellung des Einschubteils 9 unter Zwischenlage einer Dichtung 11 dicht an den mit entsprechenden Bodenöffnungen 12 versehenen Boden 13 der Reingasleitung 6 angedrückt werden, wenn der Einschubteil 9 im vorderen Bereich der Reingasleitung 6 mithilfe eines beispielsweise als Spannhebelverschluss ausgebildeten Spannverschlusses 14 an den Boden 13 der Reingasleitung 6 angedrückt gehalten wird. Zum Entnehmen eines Einschubteils 9 mit den darin eingesetzten Filterpatronen 5 braucht somit nach einem Öffnen der die Vorderwand der Rohgaskammer 1 bildenden, aus Übersichtlichkeitsgründen nicht dargestellten Tür lediglich der Spannverschluss 14 geöffnet und der Einschubteil 9 mit den Filterpatronen 5 aus der Führung 10 herausgezogen zu werden.

Zur Filterreinigung können die Filterpatronen 5 mit Druckluftimpulsen beaufschlagt werden. Zu diesem Zweck sind in den Reingasleitungen 6 an einen Druckluftspeicher 15 angeschlossene Druckleitungen 16 vorgesehen, die gegen die Bodenöffnungen 12 gerichtete Düsenöffnungen aufweisen.

Beim Einsatz einer solchen modularen Baueinheit zur Herstellung einer Filtervorrichtung ist im einfachsten Fall die Rohgaskammer 1 oben an einen Rohgaskanal anzuschließen und unten mit einem Austragstrichter für die abgeschiedenen Feststoffteilchen zu verschließen. Wird an die Reingaskammer 3 ein Gebläse angeschlossen, so kann Rohgas aus dem Rohgaskanal durch die Rohgaskammer 1 von oben angesaugt und unter einer Feststoffabscheidung durch die Filterpatronen 5 geführt werden, um als Reingas in der Reingaskammer 3 gesammelt und über das Gebläse aus der Reingaskammer 3 ausgetragen zu werden.

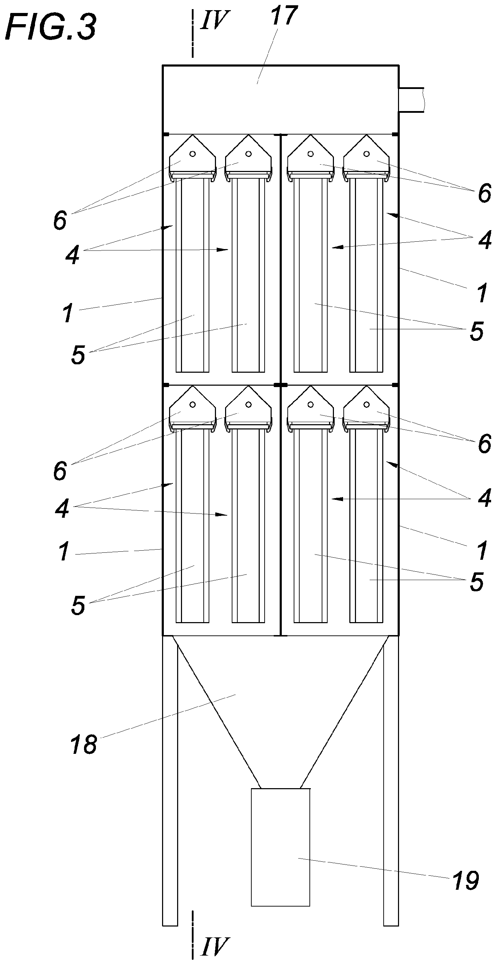

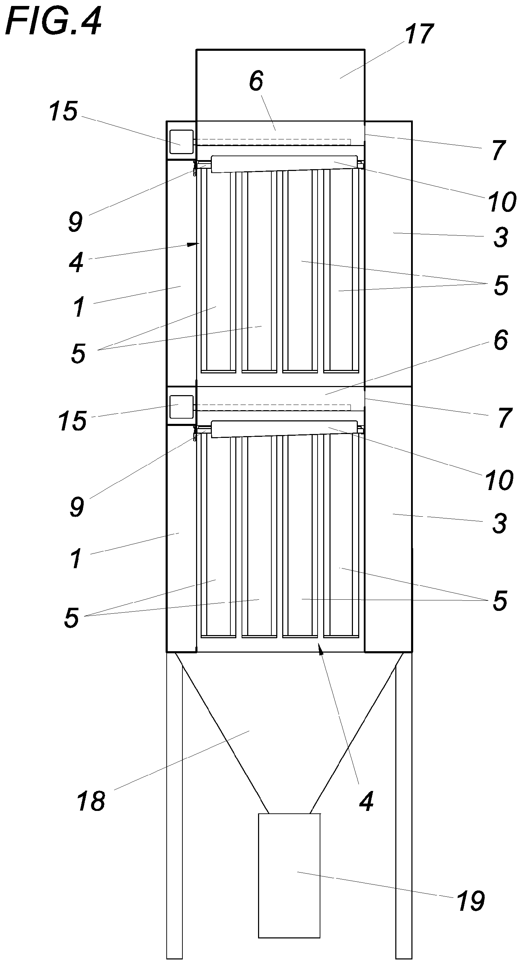

Wie das Ausführungsbeispiel einer aus mehreren modularen Baueinheiten zusammengesetzten Filtervorrichtung nach den Fig. 3 und 4 zeigt, können modulare Baueinheiten gemäß den Fig. 1 und 2 sowohl übereinander als auch nebeneinander zu einer größeren Filtervorrichtung zusammengefügt werden. Die Rohgaskammern 1 mit den auf der Rückseite angeschlossenen Reingaskammern 3 können aufeinander aufgesetzt werden, wobei sich hinsichtlich der Rohgasführung ein über die aufeinandergesetzten Rohgaskammern 1 durchgehender Strömungsschacht ergibt, der die Beaufschlagung der Filterpatronen 5 aller übereinander angeordneter Rohgaskammern 3 mit Rohgas sicherstellt, das über einen an die jeweils oberste Rohgaskammer 1 angeschlossenen Rohgaskanal 17 zugeführt wird. Da die unterste Rohgaskammer 1 unten durch einen Austragstrichter 18 abgeschlossen wird, können die aus dem Rohgasstrom abgeschiedenen Feststoffteilchen durch den Austragstrichter 18 in einen Sammelbehälter 19 ausgetragen werden.

Die Absaugung des Reingases aus den übereinander angeordneten Reingaskammern 3 kann auf unterschiedliche Weise in Abhängigkeit von den jeweiligen Vorgaben durchgeführt werden. So ist es möglich, einen der Höhe nach über die Reingaskammern 3 durchgehenden Reingaskanal vorzusehen, an den die einzelnen je für sich abgeschlossenen Reingaskammern 3 angeschlossen sind, oder die einzelnen übereinanderliegenden Reingaskammern 3 miteinander zu verbinden, um lediglich die oberste oder unterste Reingaskammer 3 an ein Sauggebläse anzuschließen.

Für nebeneinandergereihte Rohgaskammern 1 können ein gemeinsamer Rohgaskanal 17 zur Beaufschlagung der Filterpatronen 5 mit Rohgas sowie ein gemeinsamer Austragstrichter 18 für die abgeschiedenen Feststoffteilchen vorgesehen sein, und zwar unabhängig davon, ob nur eine Reihe oder mehrere übereinander angeordnete Reihen von Rohgaskammern 1 vorgesehen sind. Im Ausführungsbeispiel nach den Fig. 3 und 4 sind die Rohgaskammern 1 paarweise nebeneinander und übereinander zu einer Filtervorrichtung zusammengesetzt.

Die Erfindung ist selbstverständlich nicht auf die dargestellten Ausführungsbeispiele mit Filtern 4 in Form von reihenweise angeordneten Filterpatronen 5 beschränkt. So ist es beispielsweise möglich, anstelle der Filterpatronen 5 Filterschläuche einzusetzen oder anstelle der reihenweise angeordneten Filterpatronen 5 Filterplatten oder Faltenbalgfilter zu verwenden. Hinsichtlich der Filterauswahl ergeben sich keine Beschränkungen, wenn nur sichergestellt wird, dass die Rohgase die Filter 4 von oben nach unten umströmen und nach dem Durchsetzen des Filtermantels innerhalb des vom Filtermantel umschlossenen Strömungskanals nach oben in die an das jeweilige Filter 4 angeschlossene Reingasleitung 6 strömen.

## Patentansprüche

1. Vorrichtung zur Feststoffabscheidung aus Gasen mit einer oben an einen Rohgaskanal (17) und unten an einen Austragstrichter (18) anschließbare Rohgaskammer (1) und mit wenigstens einem in der Rohgaskammer (1) angeordneten Filter (4), dessen von einem Filtermantel umschlossener, von unten nach oben durchströmbarer Strömungskanal mit einer Reingaskammer (3) verbunden ist, wobei das Filter (4) an eine durch die oben und unten offene Rohgaskammer (1) verlaufende Reingasleitung (6) angeschlossen ist, die in die seitlich an die Rohgaskammer (1) angrenzende Reingaskammer (3) mündet, wobei weiter das Filter (4) in wenigstens einer Reihe angeordnete, vertikale Filterpatronen (5) umfasst, die in Öffnungen eines Einschubteils (9) und an diesem unmittelbar anliegend gehalten sind, der Einschubteil (9) in eine dem Boden (13) der Reingasleitung (6) zugehörige Führung (10) eingreift, und wobei in der Einschubstellung des Einschubteils (9) die Filterpatronen (5) unter Zwischenlage einer Dichtung (11) dicht an den mit entsprechenden Bodenöffnungen (12) versehenen Boden (13) der Reingasleitung (6) angedrückt werden, wenn der Einschubteil (9) im vorderen Bereich der Reingasleitung (6) mithilfe eines Spannverschlusses (14) an den Boden (13) der Reingasleitung (6) angedrückt gehalten wird, **dadurch gekennzeichnet, dass** der Einschubteil (9) in die Führung (10) eingreift und diese Führung (10) zur Herstellung der genannten dichtenden Anlage an den Boden (13) in Einschubrichtung ansteigt.

2. Vorrichtung nach Anspruch 1, **dadurch gekennzeichnet, dass** die die Rohgaskammer (1) durchsetzende Reingasleitung (6) einen für eine nach unten gerichtete Rohgasumspülung des Filters (4) günstigen Strömungsquerschnitt aufweist.

3. Vorrichtung nach Anspruch 2, **dadurch gekennzeichnet, dass** die Reingasleitung (6) eine zeltdachförmige Decke (8) bildet.

4. Vorrichtung nach einem der Ansprüche 1 bis 3, **dadurch gekennzeichnet, dass** wenigstens zwei Rohgaskammern (1) übereinander angeordnet sind, von denen die obere an den Rohgaskanal (17) und die untere an den Austragstrichter (18) anschließen.

## Claims

1. A device for the separation of solids from gases having a raw gas chamber (1) with the top connectible to a raw gas channel (17) and the bottom connectible to a discharge hopper (18), and with at least one filter (4) arranged in the raw gas chamber (1), whose flow channel, which is enclosed by a filter shell and can be perfused from the bottom to the top, is connected to a clean gas chamber (3), wherein the filter (4) is connected to clean gas line (6), which runs through the raw gas chamber (1), whose top and bottom are open, and which opens into the clean gas chamber (3) laterally adjacent to the raw gas chamber (1), wherein further the filter (4) comprises vertical cartridges (5), which are arranged in at least one row and held in openings of an insertion part (9) and abutting directly thereon, the insertion part (9) engages with a guide (10) associated with the floor (13) of the clean gas line (6), and wherein, in the insertion position of the insertion part (9), the filter cartridges (5) are pressed firmly onto the floor (13), being provided with corresponding floor openings (12), of the clean gas line (6), with intermediate placement of a seal (11), when the insertion part (9) is held pressed onto the floor (13) of the clean gas line (6) in the front region of the clean gas line (6) with the aid of a tension lock (14), **characterized in that** the insertion part (9) engages with the guide (10) and said guide (10) rises in the direction of insertion in order to create said sealing abutment with the floor (13).

2. The device according to claim 1, **characterized in that** the clean gas line (6) running through the raw gas chamber (1) has a flow cross-section that is advantageous for a downward clean gas circulation around the filter (4).

3. The device according to claim 2, **characterized in that** the clean gas line (6) forms a roof (8) in the shape of a tent.

4. The device according to one of claims 1 to 3, **characterized in that** at least two raw gas chambers (1) are arranged on top of each other, of which the top one is connected to the raw gas channel (17) and the bottom one is connected to the discharge hopper (18)

## Revendications

1. Dispositif destiné à la séparation de matière solide à partir de gaz, avec une chambre de gaz brut (1) pouvant être raccordée en haut à une conduite de gaz brut (17) et en bas à une trémie d'extraction (18), et avec au moins un filtre (4) disposé dans la chambre de gaz brut (1) et dont la conduite d'écoulement entourée d'une enveloppe de filtre et pouvant être parcourue de bas en haut est raccordée à une chambre de gaz pur (3), le filtre (4) étant raccordé à une conduite de gaz pur (6) traversant la chambre de gaz brut (1) ouverte en haut et en bas qui débouche dans la chambre de gaz pur (3) qui jouxte latéralement la chambre de gaz brut (1), le filtre (4) comprenant également des cartouches de filtre (5) verticales, disposées en au moins une rangée, qui sont retenues dans des ouvertures d'une partie encastrable (9) et de façon directement adjacente à cette partie, la partie encastrable (9) engrenant dans un guide (10) faisant partie du fond (13) de la conduite de gaz pur (6), et les cartouches de filtre (5) étant, dans la position encastrée de la partie encastrable (9), pressées, avec interposition d'un joint d'étanchéité (11), de façon étanche contre le fond (13) de la conduite de gaz pur (6) muni d'ouvertures de fond (12) correspondantes quand la partie encastrable (9) est maintenue pressée sur le fond (13) de la conduite de gaz pur (6) dans la zone avant de la conduite de gaz pur (6) à l'aide d'une fermeture à genouillère (14),
**caractérisé en ce que** la partie encastrable (9) engrène dans le guide (10) et ce guide (10) monte dans la direction d'encastrement pour la réalisation de l'appui étanche cité contre le fond (13).

2. Dispositif selon la revendication 1, **caractérisé en ce que** la conduite de gaz pur (6) traversant la chambre de gaz brut (1) comporte une section transversale d'écoulement favorable à un lavage du gaz brut du filtre (4) dirigé vers le bas.

3. Dispositif selon la revendication 2, **caractérisé en ce que** la conduite de gaz pur (6) forme une couverture (8) en forme de toit de tente.

4. Dispositif selon l'une des revendications 1 à 3, **caractérisé en ce qu'**au moins deux chambres de gaz brut (1) sont disposées l'une au-dessus de l'autre, dont la chambre supérieure se raccorde à la conduite de gaz brut (17) et la chambre inférieure se raccorde à la trémie d'extraction (18).
